Europäisches Patentamt

(19) **European Patent Office**

**Office européen des brevets**

(11) Publication number: **0 018 697**
**B1**

(12) **EUROPEAN PATENT SPECIFICATION**

(45) Date of publication of patent specification: **08.02.84**

(51) Int. Cl.³: **H 04 Q 1/457**

(21) Application number: **80200414.3**

(22) Date of filing: **02.05.80**

(54) **Digital frequency detector for detecting one or more of a plurality of fixed frequencies in an analog signal.**

(30) Priority: **02.05.79 NL 7903462**

(43) Date of publication of application:
**12.11.80 Bulletin 80/23**

(45) Publication of the grant of the patent:
**08.02.84 Bulletin 84/6**

(84) Designated Contracting States:
**DE FR IT SE**

(56) References cited:
**US - A - 3 882 283**
**US - A - 4 001 521**

**I.E.E.E. TRANSACTIONS ON COMMUNICATIONS, vol. COM-25, no. 6, June 1977 NEW YORK (US) C.R. BAUGH: "Design and performance of a digital multifrequency receiver" pages 608 to 615**

(73) Proprietor: **Staat der Nederlanden (Staatsbedrijf der Posterijen, Telegrafie en Telefonie)**
**P.O. Box 430**
**NL-2260 AK Leidschendam (NL)**

(72) Inventor: **De Keijzer, Johannes**
**Zalkerbos 145, NL-2716 KG Zoetermeer**
**NL (NL)**

Courier Press, Leamington Spa, England.

Digital frequency detector for detecting one or more of a plurality of fixed frequencies in an analog signal

The invention relates to a digital frequency detector for detecting one or more of a plurality of fixed frequencies in an analog signal according to a correlation method, the fixed frequencies occurring in a first group and in a second group and the third harmonic of one or more frequencies of the first group being equal or almost equal to a frequency of the second group, comprising a sampling and coding circuit for digitalizing an analog input signal, a reference memory for storing the coded samples of specified frequencies to be detected, a multiplier for multiplying the coded samples from the sampling circuit and the coded samples from the reference memory, an integrator for accumulating the products of said multiplication for each of said frequencies and a discriminating circuit for comparing said accumulated products and for determining the frequency with a maximum accumulated value.

A detector of this type is known from the United States Patent 4,001,521.

A problem attendant on such detectors is that by making use of the correlation principle the detection of odd harmonics takes place as a result of the digital multiplication of the square-wave signals: When one of the higher frequencies to be detected equals or almost equals an odd harmonic of one of the lower frequencies to be detected, the lower frequency can be detected as if the higher frequency is present in the signal to be analysed.

In order to eliminate said problem, it is known to extend the correlation time, so that a better discrimination of the correlation products for each of the frequencies can be achieved. This extension of the correlation time is badly compatible with the desirability of a time-division use of the detector.

It is an object of the present invention to provide a detector of the sort described, but with a greater reliability than the known devices, and offering the possibility of detecting in a relatively short time. This object and others are achieved because of the fact that the detector is characterized in that the reference memory contains the coded samples of a whole number of periods of each frequency to be detected, which frequencies are divided into a first group of lower frequencies, the coded samples of which are a reference pulse series containing for each of the frequencies six equidistant pulses per period, which pulses have the values +1, +1, 0, −1, −1, 0 and a second group of higher frequencies, the code samples of which comprise two equidistant pulses per period and which have the values +1 and −1, and in that the reference memory is read out at a frequency the value of which equals the product of the number of places in the memory and of the highest common factor of the frequencies to be detected.

According to a second characteristic of the device according to the invention said reference pulse series are arranged in a equidistant frame in the reference memory, a whole number of periods of each of the frequencies to be detected being recorded.

The invention will now be further elucidated with the help of the drawing in which

Fig. 1 represents a block diagram of the device according to the invention;

Fig. 2 shows an example of a reference series of the first group of frequencies;

Fig. 3 shows an example of a reference series of the second group of frequencies, and in which

Fig. 4 shows an example of the manner how a reference series is adapted to an equidistant frame.

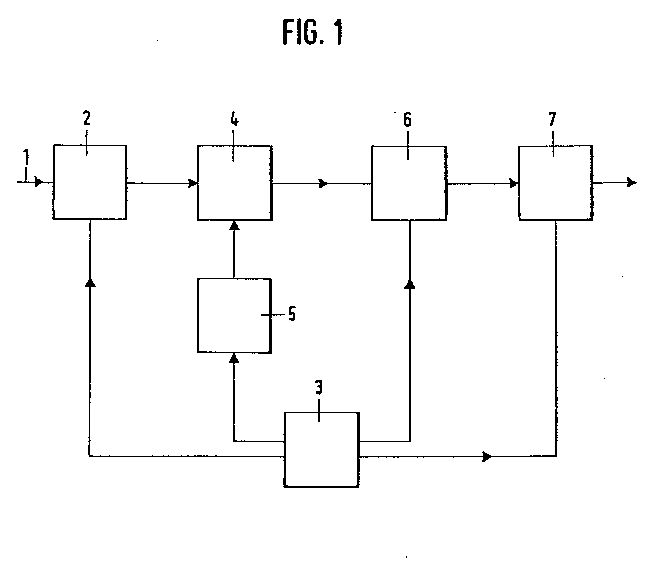

The signal to be investigated is applied to an input 1 in Fig. 1. In a sampling circuit 2 the analog signal is sampled and quantized under the control of a control circuit 3. The quantization takes place on seven levels, to wit −3, −2, −1, 0, +1, +2 and +3. These seven levels are passed on in a coded form to a multiplier 4 by means of a three-bit word. Next the multiplier 4 multiplies the coded signal by reference signals stored in a reference memory 5 in a way as known from for example the aforesaid American patent specification.

For each of the frequencies to be detected the products of this multiplication are passed on to an integrator 6, collecting the products during a fixed period of time under the control of the control circuit 3. At the end of this fixed period of time a discriminating circuit 7 determines which of the frequencies hunted for occur in the signal and passes on the result to the circuit that follows. In the embodiment described this takes place in the way as known from said American patent specification by squaring the correlation results of the quantized signal with the sine reference series and with the cosine reference series, respectively, and by adding up the two squares.

The working of the multiplier 4, the integrator 6 and the discriminating circuit 7 is generally known and more particularly from said American patent specification.

According to the invention the number of bits in the reference memory 5 is greatly reduced with regard to the known technique, thus making it possible to let the detection take place in a shorter time and to use the detection device by time-division for several MFC-channels.

According to CCITT recommendation Q 441 a first group of six frequencies, to wit 540, 660, 780, 900, 1020 and 1140 Hz, and a second group of six frequencies in a higher band, to wit 1380, 1500, 1620, 1740, 1860 and 1980 Hz are used for MFC-signalling. As the detection of odd harmonics is introduced, when making use of the correlation principle, as indicated above, it will be necessary that for the reference signals of the frequencies of the low band measures are taken to prevent the third harmonic from being too strongly present in the correlation product, since the third harmonic of some of these frequencies falls within the frequency range of the higher band.

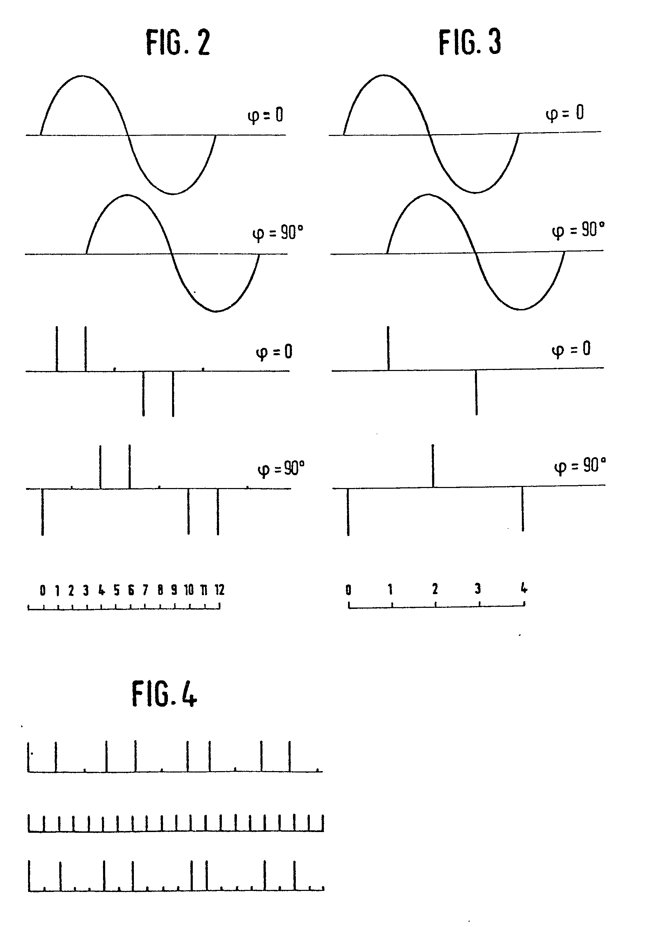

According to the invention reference signals comprising six equidistant pulses per period, successively having the values +1, +1, 0, −1, −1, 0, are used for the lower frequencies. As the correlation process requires a sine reference signal and a cosine reference signal, twelve positions per period will be needed to make the two reference signals for a frequency of the lower band fit in an equidistant frame (Fig. 2). The reference signals for the frequencies of the high band contain only two equidistant pulses with the values +1 and −1 per period. With these frequencies the harmonics fall outside the band in which the frequencies to be detected occur. Hence four pulse positions per period (Fig. 3) will be sufficient for this group of frequencies.

The quality of the result of the correlation process depends on the duration of this process. An optimum is obtained when a whole number of periods of each of the frequencies to be detected presents itself in the correlation time. In that case a maximum result is obtained from the correlation with the frequency that occurs in the signal to be investigated, whereas the results of the remaining frequencies are minimal.

The device according to the example has a correlation time of $16\frac{2}{3}$ ms, because this is the minimum time in which an equidistant frame with a whole number of periods for each of said frequencies can be read.

All the needed reference signals have been recorded in a coded form in the reference memory 5. For each of the twelve frequencies two reference series have been stored; for the group of lower frequencies each series contains twelve pulse positions per period, and for the group of higher frequencies four pulse positions per period. For said correlation time of $16\frac{2}{3}$ ms the maximum number of pulse positions is found for the frequency of 1140 Hz, to wit

$$\frac{16\frac{2}{3} \times 1140 \times 12}{1000} = 228.$$

According to the invention 12 different pulse series of the frequencies to be detected are arranged in one fixed equidistant frame to keep the reference memory 5 as simple as possible. How the distance between the pulses has to be adapted somewhat for that purpose is shown by Fig. 4. Each pulse of the reference series is stored in the nearest position in the equidistant frame. For practical reasons a frame of 256 bits

in $16\frac{2}{3}$ ms has been chosen. As the coding of each pulse requires two bits and each frequency needs two pulse series (sine and cosine), a memory of 256×48 bits will suffice for the reference memory 5. The reading frequency of this memory amounts to 256×60=15360 Hz. Moreover, a very reliable digital detection device for analog signals is obtained by having the signal applied to the input 1 sampled at said frequency.

**Claims**

1. Digital frequency detector for detecting one or more of a plurality of fixed frequencies in an analog signal according to a correlation method, the fixed frequencies occurring in a first group and in a second group and the third harmonic of one or more frequencies of the first group being equal to or almost equal to a frequency of the second group, comprising

— a sampling and coding circuit (2) for digitalizing an analog input signal (1)
— a reference memory (5) for storing the coded samples of specified frequencies to be detected
— a multiplier (4) for multiplying the coded samples from the sampling circuit and the coded samples from the reference memory
— an integrator (6) for accumulating the products of said multiplication for each of said frequencies, and
— a discriminating circuit (7) for comparing said accumulated products and for determining the frequency with a maximum accumulated value,

characterized in that

— the reference memory (5) contains the coded samples of a whole number of periods of each frequency to be detected, which frequencies are divided into a first group of lower frequencies, the coded samples of which are a reference pulse series containing for each of the frequencies six equidistant pulses per period, which pulses have the values +1, +1, 0, −1, −1, 0 and a second group of higher frequencies, the coded samples of which comprise two equidistant pulses per period and which have the values +1 and −1, and in that
— the reference memory (5) is read out at a frequency the value of which equals the product of the number of places in the memory (5) and of the highest common factor of the frequencies to be detected.

2. Digital frequency detector according to claim 1, characterized in that the reference pulse series are arranged in an equidistant frame in the reference memory (5), a whole number of periods of each of the frequencies being recorded.

**Patentansprüche**

1. Digitaler Frequenzdetektor zum Erkennen einer oder mehrerer aus einer Anzahl bestimmter Frequenzen in einem analogen Signal entsprechend einem Korrelationsverfahren, wobei die bestimmten Frequenzen in einer ersten und in einer zweiten Gruppe erscheinen, und wobei die dritte Harmonische einer oder mehrerer der Frequenzen der ersten Gruppe gleich oder nahezu gleich einer der Frequenzen der zweiten Gruppe ist, enthaltend

— eine Abtast- und Kodierschaltung (2) zur Digitalisierung eines analogen Eingangssignals (1)
— einen Referenzspeicher (5) zur Speicherung der kodierten Abtastwerte bestimmter, zu erkennender Frequenzen
— einen Vervielfacher (4) zur Vervielfachung der kodierten Abtastwerte der Abtastschaltung und der kodierten Abtastwerte des Referenzspeichers
— einen Integrator (6) zur Aufspeicherung der Ergebnisse der genannten Vervielfachung für jede der genannten Frequenzen, und
— eine Diskriminatorschaltung (7) zum Vergleich der aufgespeicherten Ergebnisse und zur Bestimmung der Frequenz mit einem höchsten aufgespeicherten Wert,

dadurch gekennzeichnet, dass

— der Referenzspeicher (5) die kodierten Abtastwerte einer ganzen Zahl von Perioden jeder der zu erkennenden Frequenzen enthält, welche Frequenzen in eine erste Gruppe niedriger Frequenzen unterteilt sind, deren kodierte Abtastwerte eine Referenzimpulsreihe sind, welche für jede der Frequenzen sechs äquidistante Impulse je Periode enthält, wobei die Impulse die Werte $+1, +1, 0, -1, -1, 0$ haben, und in eine zweite Gruppe hoher Frequenzen unterteilt sind, deren Kodierte Abtastwerte zwei äquidistante Impulse je Periode enthalten, welche die Werte $+1$ und $-1$ haben, und dass
— der Referenzspeicher (5) mit einer Frequenz ausgelesen wird, deren Wert gleich dem Produkt der Anzahl Plätze im Speicher (5) und dem höchsten gemeinsamen Faktor der zu erkennenden Frequenzen ist.

2. Digitaler Frequenzdetektor nach Anspruch 1, dadurch gekennzeichnet, dass die Referenzimpulsreihen im Referenzspeicher (5) innerhalb eines äquidistanten Rahmens angeordnet sind, wobei eine ganze Zahl von Perioden jeder der Frequenzen registriert wird.

**Revendications**

1. Détecteur de fréquence numérique destiné à détecter une ou plusieurs fréquences parmi un ensemble de fréquences fixes dans un signal analogique, par un procédé de corrélation, les fréquences fixes apparaissant dans un premier groupe et dans un second groupe, et l'harmonique de rang trois d'une ou de plusieurs des fréquences du premier groupe étant égal ou presque égal à une fréquence du second groupe, comprenant:

— un circuit d'échantillonnage et de codage (2) destiné à numériser un signal d'entrée analogique (1)
— une mémoire de référence (5) destinée à enregistrer les échantillons codés de fréquences spécifiées à détecter
— un multiplicateur (4) destiné à multiplier les échantillons codés provenant du circuit d'échantillonnage et les échantillons codés provenant de la mémoire de référence
— un intégrateur (6) destiné à accumuler les produits de cette multiplication pour chacune des fréquences, et
— un circuit de discrimination (7) destiné à comparer les produits accumulés et à dèterminer la fréquence par une valeur accumulée maximale,

caractérisé en ce que:

— la mémoire de référence (5) contient les échantillons codés d'un nombre entier de périodes de chaque fréquence à détecter, et ces fréquences sont divisées en un premier groupe de fréquences inférieures, dont les échantillons codés forment une série d'impulsions de référence contenant pour chacune des fréquences six impulsions équidistantes par période, ces impulsions ayant les valeurs $+1, +1, 0, -1, -1, 0$, et un second groupe le fréquences supérieures, dont les échantillons codés comprennent deux impulsions équidistantes par période et ont les valeurs $+1$ et $-1$, et en ce que
— la mémoire de référence (5) est lue à une fréquence dont la valeur est égale au produit du nombre de positions dans la mémoire (5) et du facteur commun les plus élevé des fréquences à détecter.

2. Détecteur de fréquence numérique selon la revendication 1, caractérisé en ce que les séries d'impulsions de référence sont incorporées dans une trame à pas constant dans la mémoire de référence (5), et un nombre entier de périodes est enregistré pour chacune des fréquences.

# FIG. 1

# FIG. 2

$\varphi = 0$

$\varphi = 90°$

$\varphi = 0$

$\varphi = 90°$

0 1 2 3 4 5 6 7 8 9 10 11 12

# FIG. 3

$\varphi = 0$

$\varphi = 90°$

$\varphi = 0$

$\varphi = 90°$

0 1 2 3 4

# FIG. 4